# EUROPEAN PATENT APPLICATION

(11) **EP 1 310 677 A2**
(43) Date of publication of application: **14.05.2003**
(21) Application number: 02021836.8
(22) Date of filing: 27.09.2002
(51) Int. Cl.: F04D 25/04, F04D 29/04

(54) **Supercharger**

(30) Priority: 08.11.2001 US 8084
(71) Applicant: BorgWarner Inc., Auburn Hills, MI 48326-1782 (US)
(72) Inventor: Lebold, Robert S., Indianapolis, Indiana 46227 (US); O'Hara, Steve, Zionsville, Indiana 46077 (US)
(74) Representative: Holmes, Miles

(57) **Abstract**

A supercharger type compressor driven by an ultra high speed electric motor, having high efficiency and providing true air boost on demand. Magnetically loaded composite (MLC) rotor technology is used in the design and construction of the electric motor for driving a supercharger.

## Description

### BACKGROUND OF THE INVENTION

### Field of the Invention

The present invention is concerned with a supercharger driven by an ultra high speed electric motor, having high efficiency and providing true air boost on demand.

### Description of the Related Art

Mechanically driven superchargers are characterized by high efficiency, but suffer from response lag.

It is well known to use an electric motor to drive a supercharger type compressor. See, e.g., US Patent 4,724,817 (Cook). A major drawback associated with the use of electric motors to drive rotating impeller compressors has been the linkage between the electric motor and the compressor impeller. That is, a given compressor will have a specific speed of rotation of the impeller in order to achieve the compression duty required of it. At the same time, an induction electric motor will have an optimum speed of rotation, at which the torque output is at a maximum (and which speed of rotation is generally far lower than the operating speed of high speed centrifugal compressors). Heretofore, in order to link the compressor with an electric drive motor, it has been necessary to employ an arrangement of one or more expensive gear assemblies in the compressor drive. In this way the different optimum speeds of rotation of the compressor and the electric motor can be accommodated. However, gearing increases expense, reduces reliability, and increases inertia thus reducing responsiveness.

The design and operation of a basic electromotor driven supercharger is disclosed, e.g., in US Patent 4,838,234 (Mayer). The shaft of an electric motor is effectively connected to the rotor shaft of a free-running pressure wave supercharger for an internal combustion engine via a free-wheel overrunning clutch. In order to start a supercharged internal combustion engine, the electric motor accelerates the cell rotor (in the case of a diesel engine, for example, during the short preheating period) to a rotational speed which ensures a functioning pressure wave process immediately after the diesel engine starts. The cell rotor is then further accelerated by the exhaust gases of the diesel engine and then releases itself from the drive connection with the electric motor, which has been put out of operation in the meantime. The electromotor is thus merely a "primer" and does not appear to be capable of rotation at ultra high speed (above 20,000 RPM).

US Patent 6,193,473 (Mruk, et al) overcomes the above problem by using a switched reluctance motor to drive the rotating centrifugal impeller of a compressor at ultrahigh speed with no gearing and with the electric motor and compressor directly linked. The present inventor considered that the drive means disclosed in Mruk, et al would be expensive, difficult to regulate particularly at lower pressures, difficult to integrate into a compact compressor of a vehicle propulsion system, and difficult to maintain.

### SUMMARY OF THE INVENTION

The present invention was made after an extensive search for a drive means capable of driving a supercharger type compressor at ultra high speed, yet providing high reliability and low product life cost despite road vibrations, engine vibrations, rapid changes in loads and speeds, and changes in temperatures to which superchargers are subjected, and wherein the drive means is simple in design and easy to manufacture.

These objectives were accomplished, and present invention was made, based on the discovery that these and other surprising benefits can be obtained when using magnetically loaded composite (MLC) rotor technology in the design and construction of the electric motor for driving a supercharger type compressor.

In a preferred embodiment, the MLC motor is located centrally on the rotor shaft, a pulley is provided at one end of the rotor shaft, and a compressor wheel is provided at the other end of the rotor shaft, with the MLC motor also functioning as a magnetic bearing. The system is as efficient as a mechanically driven system, yet is highly superior in that it provides true on-demand air boost.

The MLC motor may be switched via power electronics to work as an electricity generator. In the motor/generator embodiment, the rotor is connected via a clutching device to a pulley, which allows a belt to provide compressor power and generator drive from the engine crankshaft pulley at high compressor / generator speeds and high levels of compressor power consumption. Such a design is not only simple to construct, it is also compact, stable, highly reliable, and highly responsive.

In a further embodiment of the invention, the MLC motor driven rotary compressor is provided in a system, such as a vehicle propulsion system, together with a separate generator connected to the main engine of the propulsion system, wherein both the supercharger motor and the generator are of MLC technology. The generator and the motor are connected via power control electronics to provide high compressor / generator speeds and high levels of compressor power consumption as needed.

The foregoing has outlined rather broadly the more pertinent and important features of the present invention in order that the detailed description of the invention that follows may be better understood, and so that the present contribution to the art can be more fully appreciated. Additional features of the invention will be described hereinafter, which form the subject of the claims of the invention. It should be appreciated by those skilled in the art that the conception and the specific embodiments disclosed may be readily utilized as a basis for modifying or designing other electric motor driven compressors for carrying out the same purposes of the present invention. It should also be realized by those skilled in the art that such equivalent structures do not depart from the spirit and scope of the invention as set forth in the appended claims.

### BRIEF DESCRIPTION OF THE DRAWINGS

For a fuller understanding of the nature and objects of the present invention reference should be made by the following detailed description taken in with the accompanying drawings in which:
- Fig. 1: is a schematic showing a MLC powered supercharger compressor with a pulley for connecting to an engine crankshaft;
- Fig. 2: shows a simplified cross-section through the supercharger of Fig. 1, with a belt attached to the pulley; and
- Fig. 3: is a schematic showing the arrangement of an alternative embodiment of the invention, with separate MLC supercharger and MLC generator.

### DETAILED DESCRIPTION OF THE INVENTION

The present invention provides a supercharger type compressor driven at high RPM by a magnetically loaded composite (MLC) motor, and preferably also driven as needed, e.g., at peak load or when used as a generator, by an automobile internal combustion engine via a belt and clutched pulley.

MLC incorporates magnetic material into high strength and high integrity fibrous composite structures. Fiber reinforced composites containing magnetic material for rotating components are known in general - see, e.g., GB 1370655 and U.S. Pat. No. 4,508,567; however, these prior art devices are essentially designed for low speed applications and are unsuitable for rotating at the same speed as the compressor wheel of a supercharger, and thus are not suitable for direct driving of a supercharger type compressor at high RPM.

The MLC rotors employed in the present invention are of the type providing high electrical efficiency and ultra-high speed capacity in an electric motor/generator.

An example of an ultra high speed MLC motor is disclosed in US Patent 5,477,092 (Tarrant), the disclosure of which is incorporated herein by reference. This patent discloses that, because of the light weight of the rotor, extremely high rotational speeds can be attained, i.e., above 20,000 RPM, and even above 100,000 RPM.

Commercially, MLC motors are available from Urenco Ltd., Marlow, UK. A patent directed to a method for magnetizing a cylindrical body especially for use in rotors in electrical devices is disclosed in US Patent 6,154,352 (Atallah) assigned to Urenco Ltd., the disclosure of which is incorporated herein by reference. As described therein, by providing the magnetic material in separate discrete segments supported by bounding layers, instead of forming the magnetic material as cells within a composite body as in Tarrant, the magnetic loading can be substantially enhanced, the body is easier to magnetize uniformly and the segments can, if desired, be magnetized separately providing far greater flexibility in the magnetic patterning of the cylindrical body.

As far as the present inventors are aware, literature describes MLC as useful for motor generator rotors, high surface speed generators, flywheels, dynamometers, self-driven rollers, transducers (linear, rotary and acoustic), actuators (linear and rotary), and magnetic bearings (passive and active). However, MLC motors have never been used for the purposes of the present invention.

Benefits of MLC include weight reduction, simplified integral design, high speed, low inertia, greater quietness both mechanically & electrically, potential to reduce motor air gaps, reduced high frequency losses, i.e., no laminations, versatile magnetic patterns and numbers of poles, no PM stray fields, elimination of the back iron requirement, magnetically anisotropic/isotropic, high specific strength and stiffness, and good resistance to corrosion and chemicals. As described in US Patent 6,154,352, the use of composites can provide a material of relatively high Youngs Modulus but with far lower density, thus providing a stiffness and strength to weight ratio which is 3 to 9 times that of steel. This obviously permits high speeds and fast acceleration.

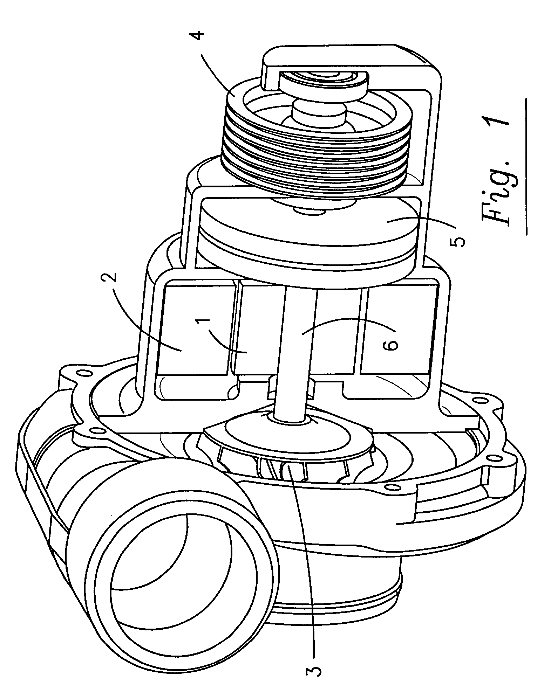

A further benefit of MLC technology is that the MLC stator and rotor can also serve as a magnetic bearing, eliminating (at least in part) the need for roller bearings which are liable to generate noise and to wear. In the preferred embodiment shown in Fig. 1, the pulley axle is of course mounted on roller bearings.

In the MLC motor the rotor may comprise a fiber-reinforced plastics material incorporating (preferably hard) magnetic filler material, the fiber-reinforced plastics material being arranged as a multi-layered cylindrical portion of the rotor, the magnetic filler material being disposed within and between the layers. The cylindrical portion may be a hollow tubular portion, and may be enclosed in a separate wear resistant, layer.

Rotors of the present invention beneficially allow an efficient electromagnetic interaction between the rotor and a neighboring stator to be maintained along the length of the body of the rotor, and out-of-balance regions in the rotating mass can be avoided when the rotor is employed at high speeds.

The plastics material may be a thermosetting or cold setting or thermoplastic polymeric material, e.g. selected from one or more of epoxy resins, polyester resins, Friedel Crafts resins, polyimides, polyamides, polyether sulfones and polyether ketones (PEEK) optionally together with known hardeners, fillers and the like. The fibers may be wound as a collection in tows. They may be wound helically and/or in hooped fashion. within the composite.

Preferably, the fibers comprise carbon fibers, or may comprise glass fibers, or KEVLAR (polyaramid) plastics or aluminum tape, boron, nylon, polyolefin or mixtures of these or any other suitable known fibers.

The magnetic material employed as the said magnetic filler material may be in the form of particles, spheroids, whiskers, fibers or the like, with powder being preferred. The magnetic material may comprise iron, nickel, cobalt or an alloy containing one or more of these. It may comprise a ferrite, e.g. barium ferrite. Alternatively, and preferably, the material comprises a known hard magnetic material (i.e., hard to de-magnetise) comprising a rare-earth element such as cobalt-samarium or neodymium-boron. The magnetic material may suitably be incorporated between tows of fibers within the composite.

Since the electric motor driven supercharger can be made more responsive, the need for devices such as storage batteries and inertial flywheels is reduced, thereby reducing vehicle weight and improving fuel economy.

The electromotor driven compressor can be regulated with almost instantaneous response. Regulating can be in response to vehicle electrical consumption, pressure at the engine intake or exhaust, or in response to fuel gas input into a fuel cell, temperature, gas pedal or brake pedal position, or any combination of these or other inputs.

The power control electrics are preferably insulated gate bipolar transistors (IGBT). IGBT combine the positive attributes of BJTs and MOSFETs. BJTs have lower conduction losses in the on-state, especially in devices with larger blocking voltages, but have longer switching times, especially at turn-off while MOSFETs can be turned on and off much faster, but their on-state conduction losses are larger, especially in devices rated for higher blocking voltages. Hence, IGBTs have lower on-state voltage drop with high. IGBTs feature many desirable properties including a MOS input gate, high switching speed, low conduction voltage drop, high current carrying capability, and a high degree of robustness. Devices have drawn closer to the 'ideal switch', with typical voltage ratings of 600 - 1700 volts, on-state voltage of 1.7-2.0 volts at currents of up to 1000 amperes, and switching speeds of 200 - 500 ns. The availability of IGBTs has lowered the cost of systems and enhanced the number of economically viable applications

Turning now to the figures, Fig. 1 shows a supercharger/generator combination, wherein an MLC motor, comprising rotor **1** and stator **2,** can be used to drive a compressor **3** as required. The MLC motor can be powered by batteries, by a generator associated with an internal combustion motor, or by a fuel cell.

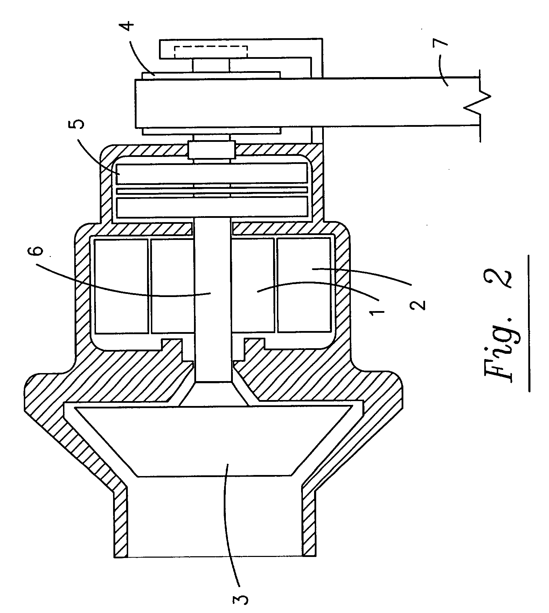

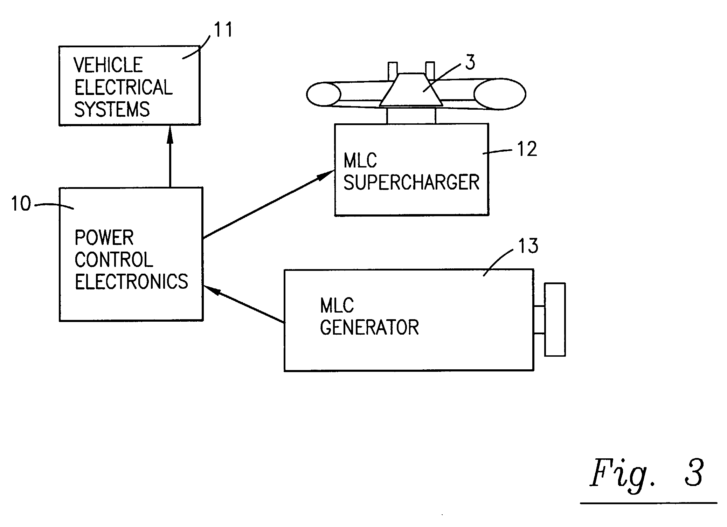

It is also possible for the MLC motor to be switched via power control electronics (see Fig. 3) to serve as an MLC electricity generator driven by positive torque from the crankshaft of an internal combustion engine (of the periodic combustion type, preferably an internal combustion engine of a hybrid combustion/electric vehicle) via a belt and pulley **4** arrangement or mechanically driven by a gear or plurality of gears driven by the engine. A variable drive clutch **5** is provided between the pulley **4** and the rotor shaft **6** to permit disengagement of the pulley when compressor wheel and pulley rotational speeds are intended to be different. The pulley, when engaged, allows a belt **7** (see Fig. 2), preferably a multivee belt, to provide compressor power and generator drive from the engine crankshaft pulley at high compressor / generator speeds and high levels of compressor power consumption. The pulley can be driven at about, e.g., a 3.45:1 ratio relative to the engine crankshaft, for increased rotational speed of the generator rotor / compressor wheel, relative to engine speed. Of course, other ratios can be used.

Although element **1** is described herein as the rotor and element **2** is described as the stator, it is possible to construct a motor/generator wherein the rotor is a hollow cylinder rotating about a stator fixed axially within the rotor.

In a preferred embodiment of the invention as shown in Fig. 3, the MLC motor driven rotary compressor is provided in a system in combination with a separate electric generator driven by an internal combustion engine, wherein not only the supercharger but also the generator is of MLC technology. The generator and the motor are connected via power control electronics to provide high compressor / generator speeds and high levels of compressor power consumption as needed.

The advantages of such a system include the following:

The supercharger operation is independent of the crankshaft operation speed or vehicle exhaust flow mass, thus the system is highly responsive.

The rotor and stator of both the supercharger and the generator are highly energy efficient.

The system is particularly suitable for use in Hybrid Electric Vehicles (HEV), particularly for meeting the battery charging and steady state operation requirements.

The MLC generator is driven via mechanical attachment to the engine crankshaft, preferably coupled via a pulley and one-way clutch arrangement.

Advantages of the overall system include high electrical efficiencies - competitive with mechanical drive in efficiency - yet superior in responsiveness and weight reduction as discussed above. The system provides true air boost on demand. [00040] Although a MLC motor driven supercharger has been described herein with great detail, with respect to internal combustion engine powered vehicles, it will be readily apparent that the supercharger is suitable for use in a number of other applications such as hybrid or fuel cell vehicles. Although this invention has been described in its preferred form with a certain of particularity with respect to an automotive internal combustion compressor wheel, it is understood that the present disclosure of the preferred form has been made only by way of example and that numerous changes in the details of structures and the composition of the combination may be resorted to without departing from the spirit and scope of the invention.

Now that the invention has been described,

## Claims

1. A compressor assembly comprising:
a magnetically loaded composite motor including a stator and a magnetically loaded composite rotor (1), said rotor (1) mounted on a rotatable drive shaft (6);
a compressor comprising a compressor casing including a fluid inlet and a fluid outlet, said compressor further comprising an impeller (3) located within said compressor casing and mounted on said drive shaft (6).

2. A compressor assembly as in claim 1, wherein said magnetically loaded composite motor is designed for operating at a speed above 20,000 RPM.

3. A compressor assembly as in claim 1, further comprising a pulley (4) mounted fixed against rotation on the rotor shaft (6).

4. A compressor assembly as in claim 3, wherein said impeller (3) is mounted on said drive shaft on one side of said rotor (1), and said pulley (4) is mounted on said drive shaft (6) on the opposite side of said rotor (1).

5. A compressor assembly as in claim 1, further comprising a pulley coupelable to said rotor shaft via a variable drive clutch.

6. A compressor assembly as in claim 1, wherein said magnetically loaded composite motor serves as a magnetic bearing system.

7. A compressor assembly as in claim 1, wherein said magnetically loaded composite motor is switchable via power electronics to function as an electricity generator.

8. A compressor as in claim 1, wherein said magnetically loaded composite rotor (1) is formed of a material selected from the group consisting of iron, nickel, cobalt and alloys including one of iron, nickel, and cobalt.

9. A compressor as in claim 1, wherein said magnetically loaded composite rotor (1) is formed of a material selected from the group consisting of barium ferrite, cobalt-samarium and neodymium-boron.

10. A compressor as in claim 1, wherein said magnetically loaded composite rotor (1) is formed of magnetic particles, spheroids, wiskers or fibers incorporated in a thermosetting, cold setting or thermoplastic polymeric material.

11. A compressor as in claim 10, wherein said polymeric material is selected from the group consisting of epoxy resins, polyester resins, Friedel Crafts resins, polyimides, polyamides, polyether sulfones and polyether ketones.

12. A compressor as in claim 10, wherein said magnetically loaded composite rotor (1) further includes fibers selected from the group consisting of carbon fibers, glass fibers, polyaramid plastics, aluminum, boron, nylon, polyolefin and mixtures thereof.

13. A vehicle propulsion system comprising:
a propulsion engine;
a generator connected to said propulsion engine for generating electricity;
a supercharger for boosting air flow to said propulsion engine;
wherein said generator and said supercharger both include a magnetic loaded composite rotor.

14. A vehicle propulsion system as in claim 13, wherein said propulsion system is selected from the group consisting of an internal combustion engine and a fuel cell system.
